# EUROPÄISCHE PATENTANMELDUNG

(11) **EP 3 257 399 A1**
(43) Veröffentlichungstag der Anmeldung: **20.12.2017**
(21) Anmeldenummer: 17175243.9
(22) Anmeldetag: 09.06.2017
(51) Int. Cl.: A46B 13/00, A46B 3/08, A46B 9/06, B60S 3/06

(54) **WASCH-, PFLEGE- UND/ODER TROCKNUNGSELEMENT SOWIE WASCH-, PFLEGE- UND/ODER TROCKNUNGSWALZE DAMIT**

(30) Priorität: 15.06.2016 DE 102016110928
(71) Anmelder: ProMicro GmbH & Co. KG, 82166 Gräfelfing (DE)
(72) Erfinder: KRACHT, Peter, 82166 Gräfelfing (DE)
(74) Vertreter: Schmitt-Nilson Schraud Waibel Wohlfrom Patentanwälte Partnerschaft mbB

(57) **Zusammenfassung**

Ein erfindungsgemäßes Wasch-, Pflege- und/oder Trocknungselement für eine Wasch-, Pflege- und/oder Trocknungswalze einer Autowaschanlage, umfasst eine Verankerungs- und Befestigungsschiene (6), insbesondere aus einem Kunststoffmaterial, mit einem Verankerungsbereich an ihrem walzennahen Ende und mit einem Befestigungsbereich (14) mit einer Vielzahl von jeweils nebeneinander angeordneten Befestigungseinrichtungen für Textil- oder Kunststoffstreifen (8) an ihrem walzenfernen Ende; und eine Vielzahl von Textil- oder Kunststoffstreifen (8), die in den Befestigungseinrichtungen befestigt sind.

## Beschreibung

Die vorliegende Erfindung betrifft ein Wasch-, Pflege- und/oder Trocknungselement, insbesondere für Autowaschanlagen, sowie eine Wasch-, Pflege und/oder Trocknungswalze mit wenigstens einem solchen ein Wasch-, Pflege- und/oder Trocknungselement.

Die DE 298 16 045 U1 zeigt ein Besatzelement für eine als rotierende Bürste ausgestaltete Reinigungseinheit einer Autowaschanlage, die wenigstens eine Nut zur Aufnahme und klemmenden Befestigung zumindest eines Besatzelements aufweist. Das Besatzelement ist aus einem Verankerungsstück und einem streifenförmigen Reinigungselement gebildet. Das Verankerungsstück hat einen in die Nut einsetzbaren Ankerbereich und einen als ebenen Streifen ausgebildeten Befestigungsbereich, an dem das Reinigungselement einseitig anliegend befestigt und insbesondere vernäht ist. Ein solches Besatzelement ist teuer in der Herstellung und weist oft nur eine geringe Lebensdauer auf.

Es ist daher eine Aufgabe der vorliegenden Erfindung, Wasch-, Pflege- und/oder Trocknungselemente anzugeben, die kostengünstig herstellbar, robust und langlebig sind und mit geringem Aufwand ausgewechselt werden können. Es soll auch eine entsprechende Wasch-, Pflege- und/oder Trocknungswalze damit angegeben werden.

Diese Aufgabe wird durch den Gegenstand der unabhängigen Patentansprüche gelöst. Vorteilhafte Weiterbildungen ergeben sich aus den abhängigen Ansprüchen.

Ein erfindungsgemäßes Wasch-, Pflege- und/oder Trocknungselement für eine Wasch-, Pflege- und/oder Trocknungswalze einer Autowaschanlage, umfasst eine Verankerungs- und Befestigungsschiene, insbesondere aus einem Kunststoffmaterial, mit einem zumindest bereichsweise wulstartigen Ankerbereich an seinem walzennahen Ende und mit einem Befestigungsbereich mit einer Vielzahl von jeweils nebeneinander angeordneten Befestigungseinrichtungen für Textil- oder Kunststoffstreifen an seinem walzenfernen Ende; und eine Vielzahl von Textiloder Kunststoffstreifen, die in den Befestigungseinrichtungen befestigt sind.

Mittels des Verankerungsbereichs ihrer Verankerungs- und Befestigungsschiene kann das erfindungsgemäße Wasch-, Pflege- und/oder Trocknungselement auf einfache Weise an einer Wasch-, Pflege- und/oder Trocknungswalze angebracht und an dieser lösbar befestigt werden. Wenn die Textil- oder Kunststoffstreifen verschmutzt, wenigstens partiell beschädigt oder verschlissen sind, kann das erfindungsgemäße Wasch-, Pflege- und/oder Trocknungselement von der Wasch-, Pflege- und/oder Trocknungswalze getrennt und durch ein erfindungsgemäßes Wasch-, Pflege- und/oder Trocknungselement mit neuen oder gereinigten Textiloder Kunststoffstreifen ersetzt werden.

Der Verankerungsbereich kann dabei erfindungsgemäß auf beliebige Weise ausgebildet sein.

Gemäß einer Variante kann der Verankerungsbereich als zumindest bereichsweise wulstartiger Ankerbereich ausgebildet sein, der zum Einschieben in eine entsprechende Aufnahmenut, die an einem mit dem Walzenkörper drehfest verbundenen und im Wesentlichen zylinderförmigen Aufnahmeelement, aber auch direkt auf dem Walzenkörper selbst vorgesehen sein können, bestimmt ist.

Gemäß einer weiteren Variante kann der Verankerungsbereich als eine Vielzahl von nebeneinander angeordneten Einsteckvorsprüngen ausgebildet sein, die zum Einstecken und Verrasten in entsprechenden Einstecklöchern einer die Walze umgebenden Matte oder in Einstecklöchern des Walzenkörpers selbst bestimmt sind.

Andere Ausbildungen des Verankerungsbereich sind ebenfalls möglich, zum Beispiel einhängende Verankerungsbereiche nach Art von Haken oder Ähnliches.

Allen solchen Verankerungsbereichen ist gemein, dass das gesamte erfindungsgemäße Wasch-, Pflege- und/oder Trocknungselement auf einfache Weise an einem Walzenkörper lösbar befestigt und, wenn die Textil- oder Kunststoffstreifen verschmutzt, wenigstens partiell beschädigt oder verschlissen sind, einfach von dem Walzenkörper gelöst und durch eine neues Wasch-, Pflege- und/oder Trocknungselement mit neuen oder gereinigten Textil- oder Kunststoffstreifen ersetzt werden kann.

Durch die Befestigung der Textil- oder Kunststoffstreifen in einer Vielzahl von jeweils nebeneinander angeordneten Befestigungseinrichtungen für dieselben ergeben sich Vorteile gegenüber dem Besatzelement der DE 298 16 045 U1, bei der ein ebener Streifen einseitig anliegend an dem Befestigungsbereich befestigt und insbesondere daran vernäht ist.

Die Befestigungseinrichtungen können mit unterschiedlichen und individuell auf den Einsatzzweck angepassten Textil- oder Kunststoffstreifen bestückt werden.

Es ist auch möglich, Textil- oder Kunststoffstreifen unterschiedlicher Art in ein und derselben Befestigungseinrichtung zu befestigen.

Durch die Befestigung der Textil- oder Kunststoffstreifen in einer Vielzahl von jeweils nebeneinander angeordneten Befestigungseinrichtungen ergibt sich zudem eine verbesserte dauerhafte Befestigung. Ein unerwünschtes partielles Ablösen des Streifens des Besatzelements der DE 298 16 045 U1, z. B. infolge eines Ausreißens direkt nach der Naht, die ja im ungünstigen Fall eine Soll-Reißstelle bilden kann, wird zuverlässig vermieden.

Des Weiteren ist ein erfindungsgemäßes Wasch-, Pflege- und/oder Trocknungselement kostengünstig und automatisiert herstellbar.

Ein erfindungsgemäßes Wasch-, Pflege- und/oder Trocknungselement kann auf einfache Weise gereinigt werden, indem es als Ganzes mitsamt der Textil- oder Kunststoffstreifen in eine Waschmaschine eingebracht und dort gewaschen wird.

Gemäß einer Erkenntnis der Erfinder ist die erfindungsgemäße Verankerungs-und Befestigungsschiene, die insbesondere aus einem Kunststoffmaterial hergestellt ist, für das Waschen in einer Waschmaschine geeignet und nimmt dabei keinen Schaden. Die Befestigungseinrichtungen für die Textil- oder Kunststoffstreifen bleiben beim Waschen in der Waschmaschine in ihrem Befestigungszustand, und die Textil- oder Kunststoffstreifen lösen sich dabei nicht aus den Befestigungseinrichtungen der Verankerungs- und Befestigungsschiene.

Gemäß einer ersten Ausführungsform der Erfindung sind Textil- oder Kunststoffstreifen unterschiedlicher Art in den Befestigungseinrichtungen befestigt.

Dabei können in unterschiedlichen Befestigungseinrichtungen Textil- oder Kunststoffstreifen derselben Art und derselben Länge oder auch Textil- oder Kunststoffstreifen verschiedener Art, z. B. verschiedener Materialbeschaffenheit, oder verschiedener Länge, befestigt werden. So können z. B. kürzere Textil- oder Kunststoffstreifen oder Textil- oder Kunststoffstreifen eines Materials an einem Ende der Verankerungs- und Befestigungsschiene sowie längere Textil- oder Kunststoffstreifen oder Textil- oder Kunststoffstreifen eines anderen Materials in einem anderen Bereich, z. B. einem Mittelbereich oder an dem anderen Ende der Verankerungs- und Befestigungsschiene befestigt werden.

Alternativ oder zusätzlich dazu ist es möglich, in ein und derselben Befestigungseinrichtung jeweils einen oder mehrere Textil- oder Kunststoffstreifen derselben Art und derselben Länge zu befestigen, oder aber mehrere Textil- oder Kunststoffstreifen unterschiedlicher Art, z. B. unterschiedlicher Materialbeschaffenheit und/oder unterschiedlicher Länge zu kombinieren. Dadurch können die Wasch-, Pflege- und/oder Trocknungsergebnisse verbessert werden.

Gemäß einer weiteren Ausführungsform sind die Befestigungseinrichtungen als Klemm-Befestigungseinrichtung ausgebildet. Solche Klemm-Befestigungseinrichtungen können auf einfache Weise angebracht werden und die Textil- oder Kunststoffstreifen zuverlässig und dauerhaft gegenüber der Verankerungs- und Befestigungsschiene befestigen. Des Weiteren bieten solche Klemm-Befestigungseinrichtungen den Vorteil, dass die Klemmung auch wieder gelöst werden kann und somit die Textil- oder Kunststoffstreifen, wenn sie verschmutzt oder verschlissen sind, auf einfache Weise wieder entfernt und durch neue ersetzt werden können. Ferner bieten solche Klemm-Befestigungseinrichtungen den Vorteil, dass sie die Textil- oder Kunststoffstreifen schonender und ohne Materialschwächungen, die z.B. bei einer vernähenden Befestigung unabdingbar sind, an der Wasch-, Pflege- und/oder Trocknungswalze befestigen, und ein ungewolltes Ausreißen oder Abtrennen von Textil- oder Kunststoffstreifen zuverlässig vermieden wird.

Gemäß einer weiteren Ausführungsform ist wenigstens ein Teil der Textil- oder Kunststoffstreifen mit ihren mittleren Bereichen in den Klemm-Befestigungseinrichtungen klemmend befestigt, und ihre Wirkungsbereiche einschließlich ihrer Enden, die für den eigentlichen Wasch-, Pflege- und/oder Trocknungsvorgang verantwortlich sind, stehen von der Verankerungs- und Befestigungsschiene weg. Dies stellt eine zuverlässige Befestigungsart dar, gleichzeitig stehen doppelt so viele Textil- oder Kunststoffstreifen-Wirkungsbereiche für den eigentlichen Wasch-, Pflege- und/oder Trocknungsvorgang zur Verfügung, als wenn Textiloder Kunststoffstreifen mir nur einem für den eigentlichen Wasch-, Pflegeund/oder Trocknungsvorgang bestimmten Wirkungsbereich vorgesehen würden.

Gemäß einer weiteren Ausführungsform sind die Klemm-Befestigungseinrichtungen als nebeneinander angeordnete Aussparungen in der walzenfernen Endseite des Befestigungsbereichs und als aus der Richtung des walzenfernen Endes in die Aussparungen eingebrachte Befestigungsstifte oder -keile ausgebildet, und die Textil- oder Kunststoffstreifen sind jeweils zwischen einer Aussparung und einem Befestigungsstift oder -keil klemmend befestigt. Eine solche Klemm-Befestigungseinrichtung und eine dadurch bewirkte Klemmbefestigung befestigt die Textil- oder Kunststoffstreifen zuverlässig und dauerhaft an der Verankerungs- und Befestigungsschiene. Des Weiteren kann eine solche Klemm-Befestigung, z. B. wenn die Textil- oder Kunststoffstreifen verschmutzt oder verschlissen sind, auch einfach wieder gelöst werden, um die Textil- oder Kunststoffstreifen auszutauschen. Ferner kann eine solche Klemm-Befestigung kostengünstig und automatisiert realisiert werden.

Gemäß einer weiteren Ausführungsform sind jeweils nebeneinander angeordnete Aussparungen von Wandabschnitten, insbesondere der walzenfernen Endseite der Verankerungs- und Befestigungsschiene oder von höckerförmigen Wandabschnitten getrennt.

Gemäß einer weiteren Ausführungsform verfügt wenigstens eine Aussparung an zwei, insbesondere in Schienenerstreckungsrichtung oder in Schienenquerrichtung gegenüberliegenden Wänden über wenigstens einen Einrast-Vorsprung und/oder über wenigstens eine Einrast-Vertiefung.

Gemäß einer weiteren Ausführungsform verfügt der wenigstens eine Befestigungsstift oder -keil an zwei gegenüberliegenden Wänden, die insbesondere im in die Aussparung eingebrachten Zustand des Befestigungsstifts oder -keils in Schienenerstreckungsrichtung oder in Schienenquerrichtung gegenüberliegen, über wenigstens eine damit korrespondierende Einrast-Vertiefung und/oder wenigstens einen damit korrespondierenden Einrast-Vorsprung.

Gemäß einer weiteren Ausführungsform ist jeweils ein Befestigungsstift oder -keil so in eine Aussparung eingebracht, dass die mit wenigstens einer Einrast-Vertiefung und/oder mit wenigstens einem Einrast-Vorsprung versehenen Wände des Befestigungsstifts oder -keils gegenüber den mit wenigstens einem Einrast-Vorsprung und/oder mit wenigstens einer Einrast-Vertiefung versehenen Wänden der Aussparung liegen und dass der wenigstens eine Einrast-Vorsprung und/oder die wenigstens eine Einrast-Vertiefung ineinander eingreifen und den Befestigungsstift oder-keil klemmend in der Aussparung befestigen.

Diese Ausführungsform stellt eine einfach herstellbare und automatisiert realisierbare Klemm-Befestigung der Textil- oder Kunststoffstreifen gegenüber der Verankerungs- und Befestigungsschiene dar. Dennoch ist diese Klemm-Befestigung wieder lösbar.

Gemäß einer weiteren Ausführungsform weist wenigstens eine Aussparung zwei, insbesondere in Schienenquerrichtung gegenüberliegende Wandstege auf, die durch Unterbrechungen von den Wandstegen der jeweils benachbarten Aussparung beabstandet sind. Der Abstand zwischen den zwei gegenüberliegenden Wandstegen einer Aussparung kann sich dabei vom walzenfernen zum walzennahen Ende des Befestigungsbereichs verringern.

Somit können die Textil- oder Kunststoffstreifen materialschonend zwischen dem Befestigungsstift oder Befestigungskeil und den Wandstegen klemmend befestigt werden. Dabei können die Wandstege insbesondere eine Federwirkung nach außen hin bereitstellen.

Gemäß einer weiteren Ausführungsform ist wenigstens ein Befestigungsstift oder -keil als Befestigungskeil ausgebildet und weist zwei gegenüberliegende Wände auf, die insbesondere im in die Aussparung eingebrachten Zustand des Befestigungsstifts oder -keils in Schienenquerrichtung gegenüberliegen. Die beiden Wände können zum walzennahen Ende des Befestigungskeils hin aufeinander zulaufen. Dadurch kann eine besonders sichere, gleichzeitig aber lösbare Klemmbefestigung erreicht werden.

Gemäß einer weiteren Ausführungsform korrespondiert der Winkel, der durch die aufeinander zulaufenden Wandstege einer Aussparung gebildet wird, mit dem Winkel, der durch die beiden aufeinander zulaufenden Wände des Befestigungskeils gebildet wird.

Gemäß einer weiteren Ausführungsform ist wenigstens ein Textil- oder Kunststoffstreifen zwischen den beiden aufeinander zulaufenden Wänden des Befestigungskeils und den aufeinander zulaufenden Wandstegen der Aussparung, in welcher der Befestigungskeil klemmend befestigt ist, klemmend befestigt. Dadurch wird eine besonders materialschonende, ein Ausreißen zuverlässig verhindernde und gleichzeitig lösbare Klemmbefestigung bereitgestellt.

Gemäß einer weiteren Ausführungsform sind die Befestigungsstifte oder -keile an ihrer schienenfernen Seite über eine parallel zur Erstreckungsrichtung der Verankerungs- und Befestigungsschiene verlaufende Verbindungsstange miteinander verbunden.

Eine solche Verbindungsstange verhindert zuverlässig ein ungewolltes Lösen eines oder weniger Befestigungsstifte oder -keile aus den Verankerungs- und Befestigungsschienen-seitigen Aussparungen. Des Weiteren kann durch das Vorsehen einer solchen Verbindungsstange eine besonders kostengünstige und automatisierte Herstellung eines erfindungsgemäßen Wasch-, Pflege- und/oder Trocknungselements erreicht werden, weil alle Befestigungsstifte oder -keile gemeinsam über die Verbindungsstange, nach entsprechendem Einlegen oder Ausrichten der Textil- oder Kunststoffstreifen gegenüber den Verankerungs- und Befestigungsschienen-seitigen Aussparungen in einem gemeinsamen Verfahrensschritt von dem walzenfernen Ende in die Aussparungen eingebracht werden können, um so die Textil- oder Kunststoffstreifen klemmend zu befestigen.

Gemäß einer weiteren Ausführungsform weist der Befestigungsbereich der Verankerungs- und Befestigungsschiene eine zu seinem walzenfernen Ende hin verbreiterte, insbesondere keilförmige Gestalt auf.

Gemäß einer weiteren Ausführungsform ist der Ankerbereich mit dem Befestigungsbereich über einen schmalen Verbindungs-Steg verbunden.

Gemäß einer weiteren Ausführungsform ist der Verankerungsbereich an dem walzennahen Ende der Verankerungs- und Befestigungsschiene als zumindest bereichsweise wulstartiger Ankerbereich ausgebildet.

Dadurch kann das erfindungsgemäße Wasch-, Pflege- und/oder Trocknungselement auf einfache Weise in eine entsprechende Aufnahmenut eines drehantreibbaren Walzenkörpers einer Wasch-, Pflege- und/oder Trocknungswalze eingebracht und, wenn die Textil- oder Kunststoffstreifen verschmutzt, wenigstens partiell beschädigt oder verschlissen sind und ausgewechselt werden sollen, ebenso schnell wieder aus dieser entnommen werden.

Das erfindungsgemäße Wasch-, Pflege- und/oder Trocknungselement kann somit mit geringem Aufwand auch individuell ausgewechselt werden, was insbesondere Vorteile gegenüber Lösungen ergibt, wo nur eine Auswechslung aller Wasch-, Pflege- und/oder Trocknungselemente möglich ist, und bei der eine solche Auswechslung oft mit großem Aufwand verbunden ist.

Durch den wulstartigen Ankerbereich ist eine zuverlässige Halterung der Verankerungs- und Befestigungsschienen und somit des gesamten Wasch-, Pflegeund/oder Trocknungselement gegenüber der Aufnahmenut der Wasch-, Pflegeund/oder Trocknungswalze gewährleistet.

Gemäß einer weiteren Ausführungsform ist der wulstartige Ankerbereich an einem Ende verbreitert ausgebildet, zum Bilden eines Anschlags gegenüber einem Ende einer Aufnahmenut eines zylinderförmigen Aufnahmeelements einer Wasch-, Pflege- und/oder Trocknungswalze. Dadurch kann eine einfache und genaue höhenmäßige Positionierung des Wasch-, Pflege- und/oder Trocknungselements gegenüber einer entsprechenden Aufnahmenut einer Wasch-, Pflege- und/oder Trocknungswalze erreicht werden.

Gemäß einer weiteren Ausführungsform sind bei wenigstens einer Aussparung Seitenwand-Aussparungen an den beiden Schienen-Seitenwänden vorgesehen, wodurch eine Materialeinsparung erreicht wird.

Gemäß einer weiteren Ausführungsform ist an dem walzenfernen Ende der Seitenwand-Aussparungen ein schienenseitiger Einrast-Vorsprung oder eine schienenseitiger Einrast-Vertiefung ausgebildet.

Gemäß einer weiteren Ausführungsform bilden die höckerförmigen Wandabschnitte jeweils schräge, sich vom walzenfernen zum walzennahen Ende des Befestigungsbereichs hin verjüngene Klemmwände aus.

Gemäß einer weiteren Ausführungsform bilden die höckerförmigen Wandabschnitte jeweils benachbarter Aussparungen durch eine, insbesondere zu der Ebene der walzenfernen Enden der Schienen-Seitenwände teilweise zurückgesetzte Oberseiten aus.

Gemäß einer weiteren Ausführungsform ist wenigstens ein Befestigungsstift oder -keil als Befestigungskeil ausgebildet und weist zwei gegenüberliegende Wände auf, die insbesondere im in die Aussparung eingebrachten Zustand des Befestigungsstifts oder -keils in Schienenlängsrichtung gegenüberliegen. Diese beiden Wände laufen zum walzennahen Ende des Befestigungskeils hin aufeinander zu.

Gemäß einer weiteren Ausführungsform korrespondiert der Winkel, der durch die aufeinander zulaufenden Klemmwände einer Aussparung gebildet wird, mit dem Winkel, der durch die beiden aufeinander zulaufenden Wände des Befestigungskeils gebildet wird.

Gemäß einer weiteren Ausführungsform ist wenigstens ein Textil- oder Kunststoffstreifen zwischen den beiden aufeinander zulaufenden Wänden des Befestigungskeils und den aufeinander zulaufenden Klemmwänden der Aussparung, in welcher der Befestigungskeil klemmend befestigt ist, klemmend befestigt.

Dadurch wird eine zuverlässige und dauerhafte, aber trotzdem lösbare Verrastung des Befestigungskeils gegenüber der Verankerungs- und Befestigungsschiene erreicht. Die Textil- oder Kunststoffstreifen werden durch den Befestigungskeil beschädigungsfrei und dauerhaft klemmend in der jeweiligen Aussparung befestigt.

Gemäß einer weiteren Ausführungsform ist der Verankerungsbereich an dem walzennahen Ende der Verankerungs- und Befestigungsschiene als eine Vielzahl von Einsteckvorsprüngen ausgebildet.

Gemäß einer weiteren Ausführungsform sind die Einsteckvorsprünge zum Einstecken in entsprechende Einstecklöcher einer die Walze umgebende Matte ausgebildet sind. Die Einsteckvorsprünge können dabei von einer walzennahen Anliegefläche vorstehen und einen verbreiterten Kopfbereich aufweisen.

Dadurch kann das erfindungsgemäße Wasch-, Pflege- und/oder Trocknungselement auf einfache Weise gegenüber einer Matte eines drehantreibbaren Walzenkörpers einer Wasch-, Pflege- und/oder Trocknungswalze befestigt und, wenn die Textil- oder Kunststoffstreifen verschmutzt, wenigstens partiell beschädigt oder verschlissen sind und ausgewechselt werden sollen, ebenso schnell wieder aus dieser entnommen werden.

Dabei ist sowohl ein individuelles Bestücken und Auswechseln von erfindungsgemäßen Wasch-, Pflege- und/oder Trocknungselementen einer Walze möglich, wie auch die Matte mit allen daran befestigten Wasch-, Pflege- und/oder Trocknungselementen als Ganzes ausgetauscht werden kann.

Das individuelle Auswechseln von erfindungsgemäße Wasch-, Pflege- und/oder Trocknungselement bietet Vorteile gegenüber Lösungen, wo nur eine Auswechslung aller Wasch-, Pflege- und/oder Trocknungselemente möglich ist, und bei der eine solche individuelle Auswechslung oft mit großem Aufwand verbunden ist.

Durch die Einsteckvorsprünge ist eine zuverlässige, einfach realisierbare und einfach wieder lösbare Befestigung der Verankerungs- und Befestigungsschiene und somit des gesamten Wasch-, Pflege- und/oder Trocknungselements gegenüber einer Matte einer Wasch-, Pflege- und/oder Trocknungswalze gewährleistet.

Die Erfindung betrifft auch eine Wasch-, Pflege- und/oder Trocknungswalze, insbesondere für Autowaschanlagen, aufweisend einen drehantreibbaren Walzenkörper; und wenigstens ein mit dem Walzenkörper drehfest verbundenes und im Wesentlichen zylinderförmiges Aufnahmeelement; wobei das wenigstens eine Aufnahmeelement an seiner Außenseite in Axialrichtung verlaufende Aufnahmenuten für Wasch-, Pflege- und/oder Trocknungselemente und zwischen benachbarten Aufnahmenuten liegende Zwischenräume aufweist; und wobei wenigstens ein Wasch-, Pflege- und/oder Trocknungselement der hier beschriebenen Art in eine Aufnahmenut eingesetzt ist.

Gemäß einer ersten Ausführungsform der Wasch-, Pflege- und/oder Trocknungswalze sind wenigstens zwei in Axialrichtung übereinander angeordnete, mit dem Walzenkörper drehfest verbundene und im Wesentlichen zylinderförmige Aufnahmeelemente vorgesehen; und jeweils zwei benachbarte Aufnahmeelemente sind so in Drehrichtung zueinander versetzt, dass die Aufnahmenuten eines Aufnahmeelements in Axialrichtung mit Zwischenräumen des jeweils benachbarten Aufnahmeelements fluchten, um so ein auseinanderbaufreies Auswechseln der Wasch-, Pflege- und/oder Trocknungselemente zu erlauben.

Die Erfindung betrifft auch eine Wasch-, Pflege- und/oder Trocknungswalze, insbesondere für Autowaschanlagen, aufweisend einen drehantreibbaren Walzenkörper; und wenigstens eine mit dem Walzenkörper drehfest verbundene und den Walzenkörper umgebende Matte mit einer Vielzahl von Einstecklöchern. Dabei ist wenigstens ein Wasch-, Pflege- und/oder Trocknungselement der hier beschriebenen Art an der Matte befestigt ist, indem seine Einsteckvorsprünge in entsprechende Einstecklöcher der Matte eingesteckt sind.

Gemäß einer ersten Ausführungsform der Wasch-, Pflege- und/oder Trocknungswalze weist die Matte mehrere, jeweils voneinander beabstandete Reihen von übereinander angeordneten Einstecklöchern auf.

Gemäß einer weiteren Ausführungsform der Wasch-, Pflege- und/oder Trocknungswalze ist an jeder Reihe von übereinander angeordneten Einstecklöchern ein Wasch-, Pflege- und/oder Trocknungselement der hier beschriebenen Art durch Einstecken seiner Einsteckvorsprünge in die Einstecklöcher der Reihe befestigt.

Die oben mit Bezug auf das erfindungsgemäße Wasch-, Pflege- und/oder Trocknungselement beschriebenen Vorteile und Ausführungsformen treffen in gleicher Weise auf eine erfindungsgemäße Wasch-, Pflege- und/oder Trocknungswalze zu, bei der wenigstens ein Wasch-, Pflege- und/oder Trocknungselement der hier beschriebenen Art in eine Aufnahmenut davon eingesetzt ist oder bei der wenigstens ein Wasch-, Pflege- und/oder Trocknungselement der hier beschriebenen Art an der Matte befestigt ist, indem seine Einsteckvorsprünge in entsprechende Einstecklöcher der Matte eingesteckt sind. Zur Vermeidung von Wiederholungen werden die Vorteile und Ausführungsformen hier nicht noch einmal angegeben.

Die Erfindung ist nachfolgend anhand von Ausführungsbeispielen mit Bezug auf die beiliegenden Figuren näher erläutert.
Figur 1 zeigt eine perspektivische Ansicht schräg von oben eines zylinderförmiges Aufnahmeelements für eine Wasch-, Pflege- und/oder Trocknungswalze einer Autowaschanlage, mit einer Vielzahl von daran befestigten Verankerungs- und Befestigungsschienen mit daran klemmend befestigten Textil- oder Kunststoffstreifen, gemäß einem Ausführungsbeispiel der vorliegenden Erfindung;
Figur 2 zeigt eine schematische Darstellung eines Wasch-, Pflege- und/oder Trocknungselements für eine Wasch-, Pflege- und/oder Trocknungswalze einer Autowaschanlage;
Figur 3 zeigt eine vergrößerte Teilansicht des Wasch-, Pflege- und/oder Trocknungselements aus Figur 2;
Figur 4 zeigt eine schematische perspektivische Ansicht einer alternativen Ausführungsform der Verankerungs- und Befestigungsschiene, gemäß einem weiteren Ausführungsbeispiel der vorliegenden Erfindung;
Figur 5 zeigt eine perspektivische Ansicht schräg von oben auf zwei in Axialrichtung übereinander und in Drehrichtung zueinander versetzt angeordnete zylinderförmige Aufnahmelemente, mit einer Anzahl von in einige Aufnahmenuten derselben eingesetzten Verankerungs- und Befestigungsschienen, gemäß einem Ausführungsbeispiel der vorliegenden Erfindung;
Figur 6 zeigt eine Draufsicht auf ein zylinderförmiges Aufnahmeelement mit einer in eine C-förmige Aufnahmenut eingeschobenen Verankerungs- und Befestigungsschiene;
Figur 7 zeigt eine Schnittansicht entlang einer horizontalen Schnittebene durch ein zylinderförmiges Aufnahmeelement und durch eine in eine C-förmige Aufnahmenut davon eingesetzte Verankerungs- und Befestigungsschiene;
Figur 8 zeigt eine Schnittansicht in Längsrichtung durch ein zylinderförmiges Aufnahmeelement mit einer in einer C-förmigen Aufnahmenut davon eingesetzten Verankerungs- und Befestigungsschiene;
Figur 9 zeigt eine schematische perspektivische Ansicht einer Verankerungs- und Befestigungsschiene schräg von oben, gemäß einem weiteren Ausführungsbeispiel der Erfindung;

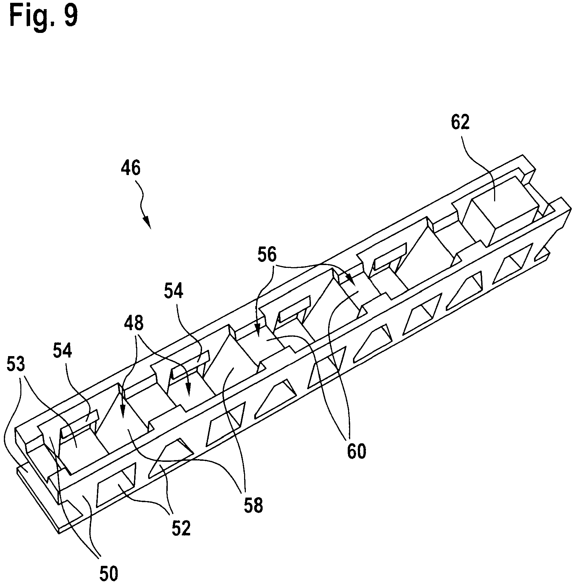

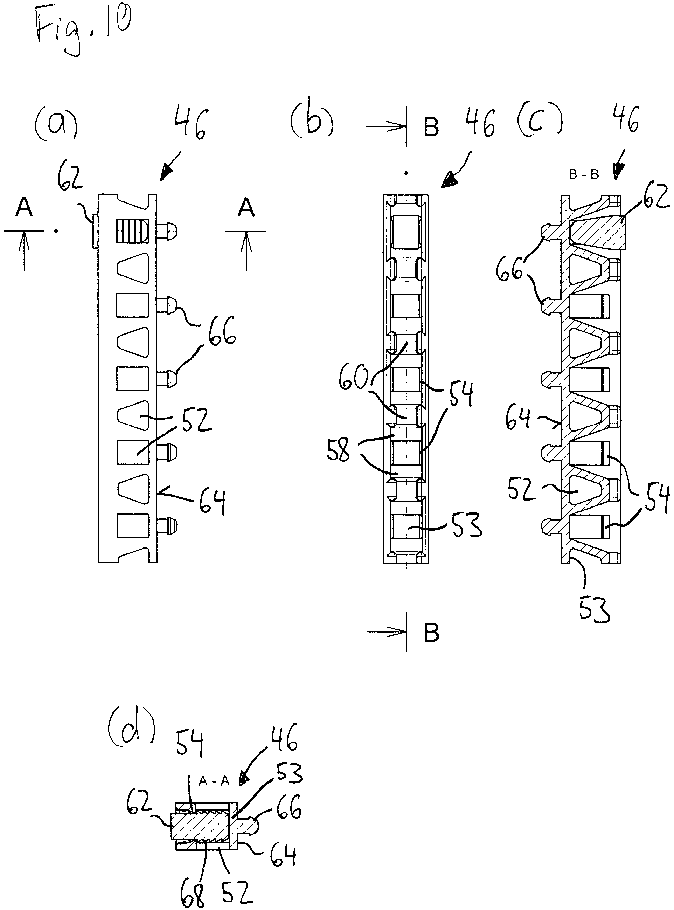

Figur 10 zeigt anhand ihrer Teilfigur 10(a) eine Seitenansicht eines Ausschnitts der Verankerungs- und Befestigungsschiene aus Figur 9, anhand ihrer Teilfigur 10(b) eine Draufsicht auf diese Verankerungs- und Befestigungsschiene aus Richtung ihres walzenfernen Endes; anhand ihrer Teilfigur 10(c) eine Schnittansicht eines Längsschnitts durch die Verankerungs- und Befestigungsschiene entlang der in Figur 10(b) als Schnittlinie B-B eingezeichneten Symmetrieebene; und anhand ihrer Teilfigur 10(d) eine Schnittansicht durch die Verankerungs- und Befestigungsschiene entlang einer in Figur 10(a) als Schnittlinie A-A eingezeichneten Querebene;
Figur 11 zeigt anhand ihrer Teilfigur 11 (a) eine Draufsicht auf einen Ausschnitt einer Matte mit zwei daran befestigten Verankerungs- und Befestigungsschienen; und anhand ihrer Teilfigur 11 (b) eine Schnittansicht in horizontaler Richtung durch diese Matte und durch die zwei daran befestigten Verankerungs- und Befestigungsschienen gemäß einem weiteren Ausführungsbeispiel der vorliegenden Erfindung; und
Figur 12 zeigt eine schematische perspektivische Ansicht auf die Matte aus Figur 11 mit zwei daran befestigten Verankerungs- und Befestigungsschienen schräg von unten.

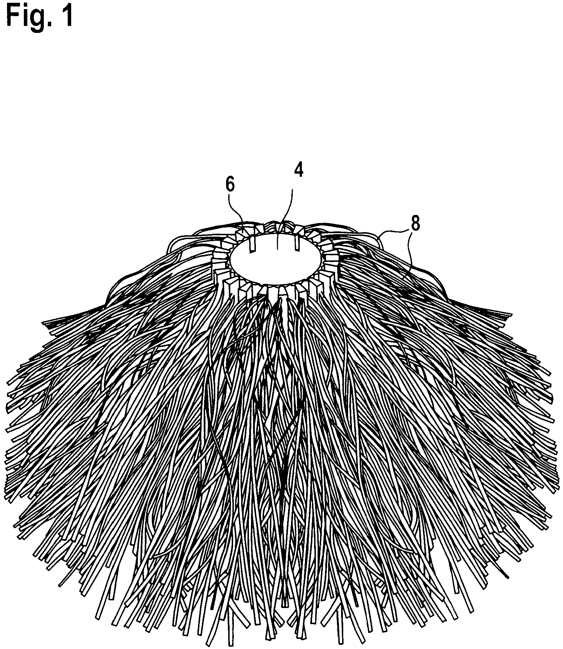

Figur 1 zeigt ein zylinderförmiges Aufnahmeelements 4 für eine Wasch-, Pflege- und/oder Trocknungswalze einer Autowaschanlage, mit einer Vielzahl von daran befestigten Verankerungs- und Befestigungsschienen 6 mit einer Vielzahl von daran klemmend befestigten Textil- oder Kunststoffstreifen 8. Die Textil- oder Kunststoffstreifen 8 erstrecken sich von den Verankerungs- und Befestigungsschienen 6 in etwa radial nach außen. Ihre Wirkungsbereiche einschließlich ihrer Enden, die den eigentlichen Wasch-, Pflege- und/oder Trocknungsvorgang bewirken, sind aufgrund der Schwerkraft etwas nach unten gerichtet.

Das zylinderförmiges Aufnahmeelement 4 kann dabei auf geeignete Weise auf eine Wasch-, Pflege- und/oder Trocknungswalze (nicht gezeigt) einer Autowaschanlage aufgebracht, insbesondere aufgeschoben werden und drehfest an dieser, beispielsweise über geeignete Adapter befestigt werden.

In einer hier nicht gezeigten Ausführungsform können entsprechende Adapter vorgesehen werden, die an ihrer Innenseite an dem drehantreibbaren Walzenkörper und an ihrer Außenseite an der Innenseite des zylinderförmigen Aufnahmeelements gehaltert sind oder an diesen jeweils eingreifen.

Das erfindungsgemäße zylinderförmige Aufnahmeelement 4 verfügt an seiner Außenseite über in Axialrichtung verlaufende Aufnahmenuten, in die, insbesondere von oben Wasch-, Pflege- und/oder Trocknungselemente, die vorliegend durch die Verankerungs- und Befestigungsschienen 6 und die jeweils klemmend daran befestigten Textil- oder Kunststoffstreifen 8 gebildet sind, von oben eingeschoben werden können.

Gemäß einer weiteren, hier nicht gezeigten Ausführungsform sind mehrere übereinander angeordnete und mit dem drehantreibbaren Walzenkörper drehfest verbundene zylinderförmige Aufnahmeelemente 4 vorgesehen, die jeweils so in Drehrichtung zueinander versetzt sind, dass die Aufnahmenuten eines Aufnahmeelements in Axialrichtung mit Zwischenräumen des jeweils benachbarten Aufnahmeelements fluchten, um so ein auseinanderbaufreies Auswechseln der Wasch-, Pflege- und/oder Trocknungselemente, insbesondere ein Einschieben der Wasch-, Pflege- und/oder Trocknungselemente in die Aufnahmenuten und ein Herausschieben aus diesen heraus, zu erlauben.

Die zylinderförmiges Aufnahmeelement 4 und die Wasch-, Pflege- und/oder Trocknungswalze können mittels eines ebenfalls nicht gezeigten Antriebs in Rotationsrichtung angetrieben werden.

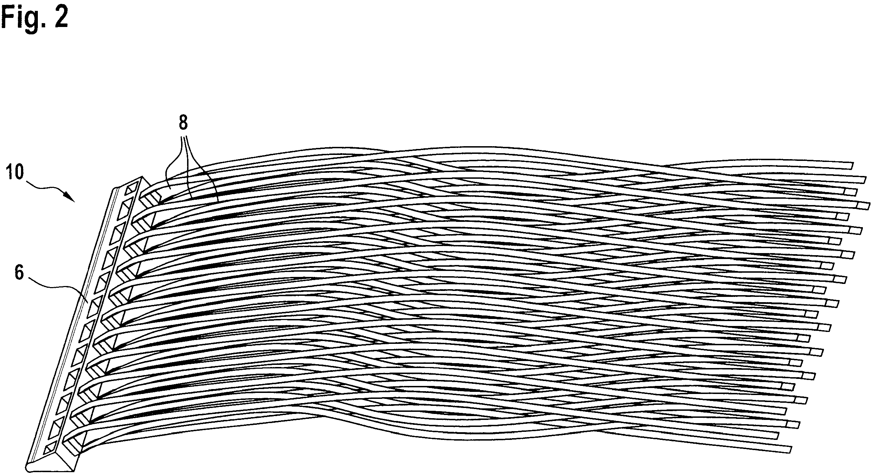

Figur 2 zeigt eine schematische Darstellung eines Wasch-, Pflege- und/oder Trocknungselements 10 für eine Wasch-, Pflege- und/oder Trocknungswalze einer Autowaschanlage.

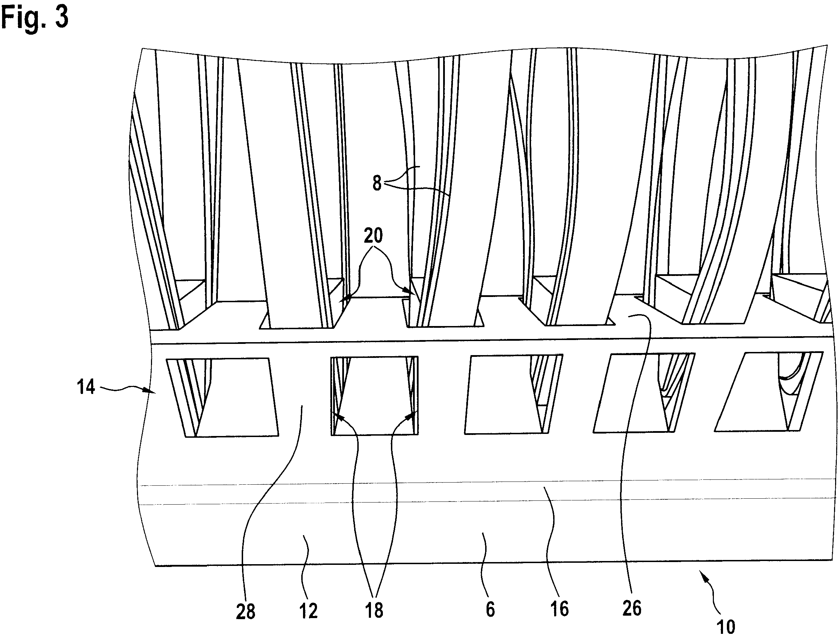

Figur 3 zeigt eine vergrößerte Teilansicht des Wasch-, Pflege- und/oder Trocknungselements 10.

Dabei ist gut zu erkennen, dass die Verankerungs- und Befestigungsschiene 6 über einen wulstartigen Ankerbereich 12 verfügt, dessen Außenabmessungen mit den Innenabmessungen einer C-förmigen Aufnahmenut des zylinderförmigen Aufnahmeelements 4 korrespondieren oder geringfügig kleiner ausgebildet sind als diese, so dass die Verankerungs- und Befestigungsschiene 6 in eine solche Aufnahmenut eingeschoben und aus dieser wieder herausgeschoben werden kann.

Des Weiteren verfügt die Verankerungs- und Befestigungsschiene 6 über einen zu ihrem walzenfernen Ende hin verbreiterten keilförmigen Befestigungsbereich 14 der mit dem wulstartigen Ankerbereich 12 über einen schmalen Verbindungssteg 16 verbunden ist.

Der Befestigungsbereich 14 umfasst an seiner walzenfernen Endseite eine Vielzahl von nebeneinander angeordneten Aussparungen 18, in denen jeweils ein, im vorliegenden Ausführungsbeispiel jeweils zwei Textil- oder Kunststoffstreifen 8 mit Hilfe jeweils eines Befestigungskeils 20 klemmend befestigt sind.

Jeweils nebeneinander angeordnete Aussparungen 18 sind durch Wandabschnitte 26 der walzenfernen Endseite der Verankerungs- und Befestigungsschiene 6 voneinander getrennt.

Die Textil- oder Kunststoffstreifen 8 sind jeweils mit ihren mittleren Bereichen mit Hilfe der Befestigungskeile 20 in den Aussparungen 18 klemmend befestigt, und ihre Wirkungsbereiche einschließlich ihrer Enden stehen von der Verankerungsund Befestigungsschiene 6 weg.

Gemäß dem Ausführungsbeispiel der Figuren 2 und 3 verfügen die Aussparungen 18 an ihrem seitlichen Ende, bezogen auf die Umfangsrichtung des zylinderförmigen Aufnahmeelements 4 und der Wasch-, Pflege- und/oder Trocknungswalze, jeweils über zwei Wandstege 28, an deren Innenseiten die Textil- oder Kunststoffstreifen 8 anliegen.

In dem Ausführungsbeispiel der Figuren 2 und 3 können die Befestigungskeile 20 über zwei jeweils in axialer Richtung bzw. in Längserstreckungsrichtung der Verankerungs- und Befestigungsschiene 6 wegstehende Einrastvorsprünge verfügen, die im klemmenden Befestigungszustand der Befestigungskeile 20 gemäß Figur 3 jeweils ein Stück weit hinter die Wandabschnitte 26 greifen und so für eine Verrastung und somit eine Klemmbefestigung der mittleren Bereiche der Textil- oder Kunststoffstreifen 8 zwischen den seitlichen Innenseiten der Wandstege 28 und den diesen zugewandten Außenseiten der Befestigungskeile 20 sorgen.

Die Befestigungskeile 20 haben dabei eine, in Umfangsrichtung des zylinderförmigen Aufnahmeelements 4 und der Wasch-, Pflege- und/oder Trocknungswalze 6 gesehen, sich nach unten hin verjüngende Gestalt, der Verjüngungswinkel der beiden sich verjüngenden, gegenüberliegenden Wandabschnitte des Befestigungskeils 20 kann dabei insbesondere auf den Verjüngungswinkel der Innenseiten der Wandstege 28 abgestimmt sein.

In Figur 2 ist gut zu sehen, dass die Verankerungs- und Befestigungsschiene 6, insbesondere deren wulstartiger Ankerbereich 12, dessen schmaler Verbindungssteg 16 und optional auch der Befestigungsbereich 14 an einem Schienenende verbreitert ausgebildet ist, zum Bilden eines Anschlags gegenüber einem Ende einer Aufnahmenut eines zylinderförmigen Aufnahmeelements 4 einer Wasch-, Pflege- und/oder Trocknungswalze.

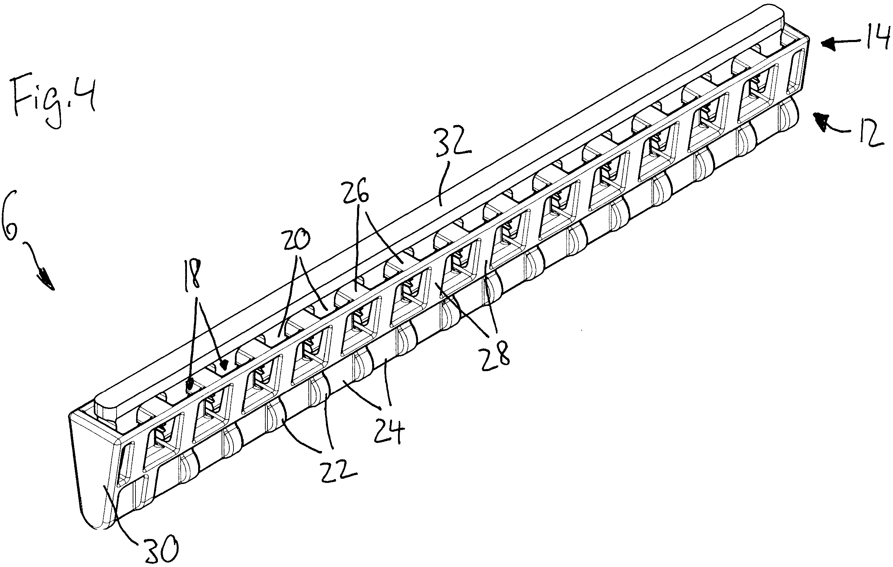

Figur 4 zeigt eine schematische perspektivische Ansicht einer alternativen Ausführungsform der Verankerungs- und Befestigungsschiene 6, die in vielerlei Hinsicht mit der Verankerungs- und Befestigungsschiene 6, wie sie in den Figuren 1, 2 und 3 gezeigt und beschrieben worden ist, übereinstimmt.

Jeweils übereinstimmende Elemente sind mit denselben Bezugszeichen gekennzeichnet.

Im Unterschied zu der Verankerungs- und Befestigungsschiene 6 der Figuren 1 bis 3 ist der Ankerbereich nicht über die gesamte Schienenlänge wulstartig ausgeführt, sondern umfasst eine Vielzahl von beabstandet zueinander liegenden wulstartigen Ankerbereichs-Abschnitten 22 mit jeweils dazwischen angeordneten flachen Zwischenabschnitten 24, und die Befestigungskeile 20 sind nicht getrennt voneinander ausgebildet, sondern hängen vielmehr integral über eine rückwärtige walzenferne Befestigungsstange 32 zusammen.

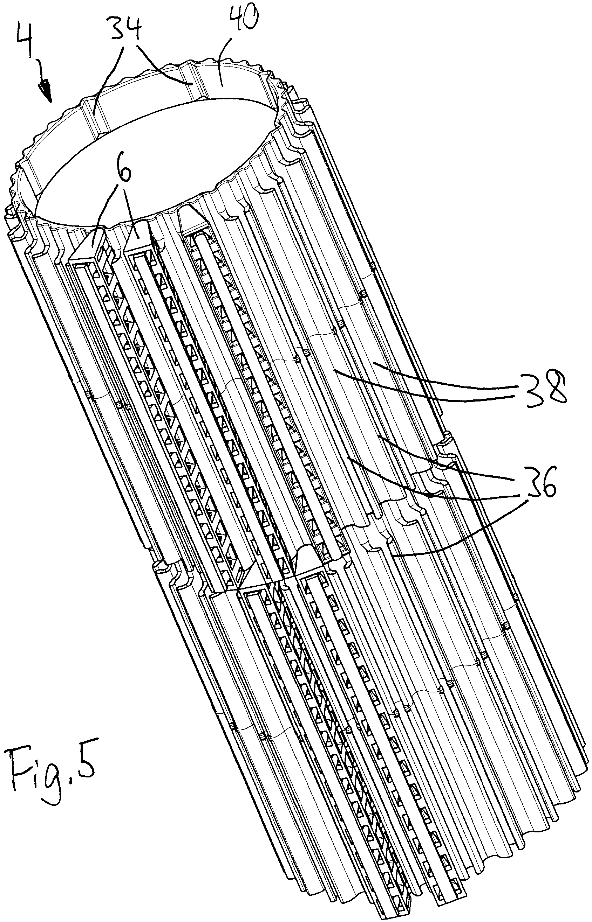

Figur 5 zeigt eine perspektivische Ansicht schräg von oben auf zwei in Axialrichtung übereinander und in Drehrichtung zueinander versetzt angeordnete zylinderförmige Aufnahmelemente 4, mit einer Anzahl von in einige C-förmige Aufnahmenuten 36 eingesetzten Verankerungs- und Befestigungsschienen 6.

Man möge sich radial nach außen anschließend und in den Verankerungs- und Befestigungsschienen 6 klemmend befestigte Textil- oder Kunststoffstreifen vorstellen, die zur besseren Darstellung nicht gezeigt sind.

Gemäß Figur 5 ist das obere zylinderförmige Aufnahmeelement 4 so auf das untere zylinderförmige Aufnahmeelement 4 aufgesetzt und versetzt angeordnet, dass die Zwischenräume 38 zwischen den C-förmigen Aufnahmenuten 36 des oberen zylinderförmigen Aufnahmeelements 4 mit den C-förmigen Aufnahmenuten 36 des unteren zylinderförmigen Aufnahmeelements 4 in Axialrichtung fluchten.

Zwei Verankerungs- und Befestigungsschienen 6 sind mit ihren wulstartigen Ankerbereichen 12 von oben über die jeweils darüber liegenden fluchtenden Zwischenräume 38 in die C-förmigen Aufnahmenuten 36 des unteren zylinderförmigen Aufnahmeelements 4 eingesetzt worden, und durch Aufliegen des verbreiterten oberen Endanschlags-Abschnitts 30 auf den jeweils oberen Wandenden der C-förmigen Aufnahmenuten 36 und/oder durch Einrasten von Einrastvorsprüngen, die an einem mittleren Abschnitt der Verankerungs- und Befestigungsschiene 6 vorgesehen werden können, gegenüber Aufnahmenut-seitigen Einrastvertiefungen, die an einem mittleren Abschnitt der C-förmigen Aufnahmenutwände vorgesehen sein können, höhenmäßig fixiert worden.

Analog dazu sind drei Verankerungs- und Befestigungsschienen 6 von oben mit ihren wulstartigen Ankerbereichen 12 in die C-förmigen Aufnahmenuten 36 des oberen zylinderförmigen Aufnahmeelements 4 eingesetzt worden, und durch Aufliegen ihrer verbreiterten Endanschlags-Abschnitte 30 auf den jeweils oberen Wandenden der C-förmigen Aufnahmenuten 36 und/oder durch Einrasten von deren mittleren Einrastvorsprüngen gegenüber den Aufnahmenut-seitigen Einrastvertiefungen höhenmäßig fixiert worden.

Das zylinderförmige Aufnahmeelement 4 ist an seinem äußeren Umfang mit einer Vielzahl von Aufnahmenuten 36 für Wasch-, Pflege- und/oder Trocknungselemente 10, insbesondere für deren Verankerungs- und Befestigungsschienen 6, sowie mit jeweils dazwischen angeordneten Zwischenräumen 38 versehen. Die Aufnahmenuten 36 sind äquidistant angeordnet und weisen, im Querschnitt gesehen, ein C-förmiges Profil auf. Sie erstrecken sich beinahe über die gesamte Höhe des zylinderförmigen Aufnahmeelements 4 und können an dem oberen Ende und an einem unteren Ende (hier nicht gezeigt) mit einem Einfädelungsabschnitt versehen sein, in dem die Höhe der Wände der C-förmigen Aufnahmenuten 36 zum jeweiligen Ende des Aufnahmeelements 4 hin abnimmt.

Die Zwischenräume 38 sind in Drehrichtung so bemessen, dass sie mindestens dem Innendurchmesser einer C-förmigen Aufnahmenut 36 entsprechen, sodass eine Verankerungs- und Befestigungsschiene 6 mit ihrem wulstartigen Ankerbereich 12, deren Außendurchmesser mit dem Innendurchmesser der C-förmigen Aufnahmenut 36 korrespondiert oder geringfügig kleiner als diese ausgebildet ist, von oben oder unten in die Aufnahmenut 36 eingeschoben werden kann.

An seinem oberen Innenseitenende und an seinem unteren Innenseitenende (hier nicht gezeigt) hat das zylinderförmige Aufnahmeelement 4 jeweils einen ringförmigen Adapterringhaltebereich 40 mit einer Anzahl von Adapterring-Halteeinbuchtungen 34, deren Form der Außenform von äußeren Haltevorsprüngen eines auf dem Walzenkörpers anzubringenden Adapterrings oder an dem Walzenkörper vorgesehenen Haltevorsprüngen entspricht, also vorliegend zahnartig beziehungsweise dreiecksförmig ausgebildet ist. Auf diese Weise können die zylinderförmigen Aufnahmeelemente 4 einfach und zuverlässig drehfest mit dem Walzenkörper verbunden werden.

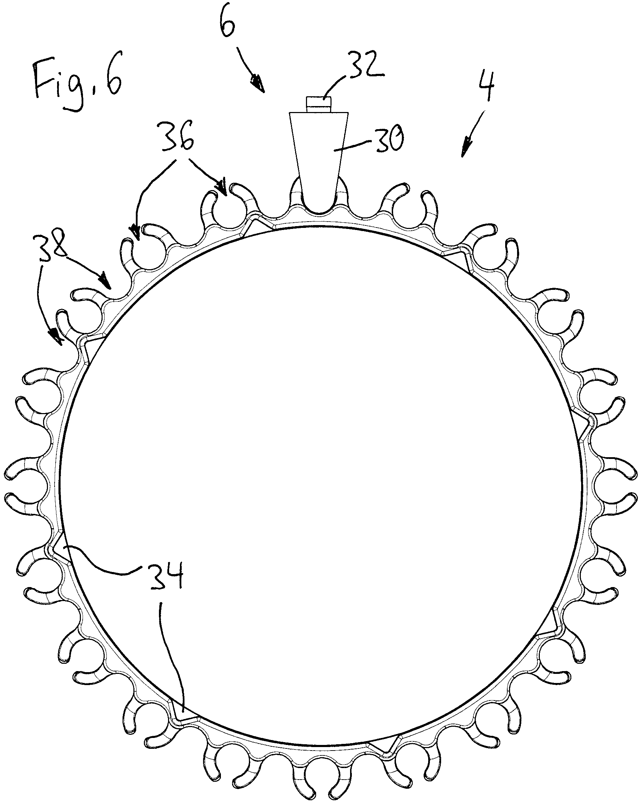

Figur 6 zeigt eine Draufsicht auf ein zylinderförmiges Aufnahmeelement 4 mit einer in eine C-förmige Aufnahmenut 36 eingeschobenen Verankerungs- und Befestigungsschiene 6.

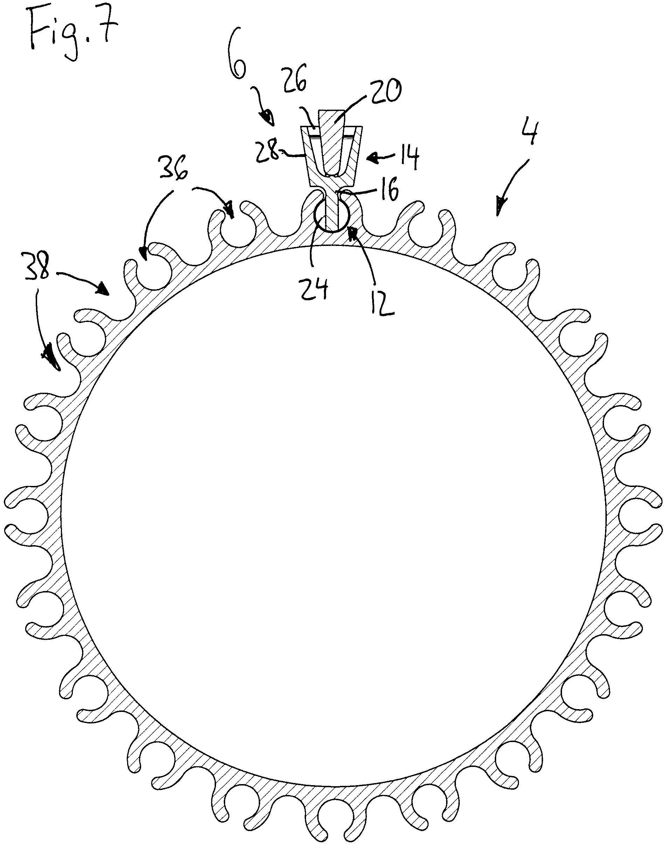

Figur 7 zeigt eine Schnittansicht entlang einer horizontalen Schnittebene durch ein zylinderförmiges Aufnahmeelement 4 und durch eine in eine C-förmige Aufnahmenut 36 davon eingesetzte Verankerungs- und Befestigungsschiene 6.

In den Figuren 6 und 7 ist gut erkennen, wie die C-förmigen Aufnahmenuten 36 mit jeweils dazwischen angeordneten Zwischenräumen 38 äquidistant über den äußeren Umfang des zylinderförmigen Aufnahmeelements 4 angeordnet sind. In Figur 6 sind zudem die an der oberen Innenseite des zylinderförmigen Elements 4 angeordneten Adapterring-Halteeinbuchtungen 34 gut zu erkennen. In Figur 6 ist des Weiteren gut zu erkennen, wie der verbreitete Anschlags-Endabschnitt 30 auf den Wand-Endbereichen der C-förmigen Aufnahmenut 36 aufliegt und die Verankerungs- und Befestigungsschiene 6 so höhenmäßig fixiert. Sowohl in Figur 6 als auch in Figur 7 möge man sich nach außen von der Verankerungs- und Befestigungsschiene 6 erstreckend und klemmend an diesen befestigt eine Vielzahl von Textil- oder Kunststoffstreifen vorstellen.

In Figur 6 ist noch die Verbindungsstange 32 zu erkennen, welche die Befestigungskeile rückwärtig integral miteinander verbindet. Gemäß Figur 7 ist der schmale Zwischenbereich 24 zwischen zwei wulstartigen Ankerbereichsabschnitten in der C-förmigen Aufnahmenut 36 dargestellt. Des Weiteren ist gut zu erkennen, wie der schmale Verbindungssteg 16 zwischen den äußeren Wandendabschnitten der C-förmigen Aufnahmenut 36 liegt und so bemessen ist, dass seine Querabmessung mit dem Zwischenraum zwischen den äußeren Wandendabschnitten übereinstimmt oder geringfügig kleiner als dieser ausgebildet ist.

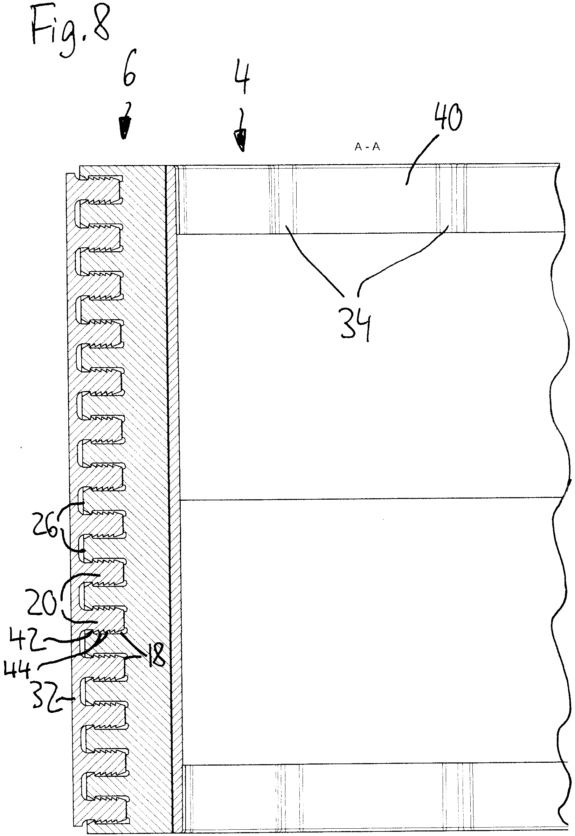

Ferner ist der radial nach außen verbreitert keilförmig ausgebildete Befestigungsbereich 14 der Verankerungs- und Befestigungsschiene 6 zu erkennen, mit den sich radial nach außen verbreiternden Wandstegen 28 und den in die Aussparung 18 eingebrachten Befestigungskeil 20, der in axialer Richtung über Einrastvorsprünge gegenüber den Wandabschnitten 26 verrastet ist., was in Figur 8 näher erläutert wird.

In den lateralen Zwischenräumen zwischen dem Befestigungskeil 20 und den Wandstegen 28 sowie zwischen dem unteren Ende des Befestigungskeils 20 und dem Boden der Aussparung 18 möge man sich Textil- oder Kunststoffstreifen klemmend befestigt vorstellen.

Figur 8 zeigt eine Schnittansicht in Längsrichtung durch ein zylinderförmiges Aufnahmeelement 4 mit einer in einer C-förmigen Aufnahmenut davon eingesetzten Verankerungs- und Befestigungsschiene 6.

Die am oberen und unteren Innenwandende vorgesehenen ringförmigen Adapterring-Haltebereiche 40 mit den Adapterring-Halteeinbuchtungen 34 sind dabei gut zu erkennen.

Des Weiteren ist gut zu erkennen, wie die Verankerungs- und Befestigungsschiene 6 mit dem walzennah gelegenen Ende des wulstartigen Ankerbereich 12 an dem Boden der C-förmigen Aufnahmenut anliegt, wie die Befestigungskeile 20 in die walzenfernen Aussparungen 18 eingebracht und dort verrastet sind und wie die Befestigungskeile 20 über die rückwärtige Verbindungsstange 32 miteinander verbunden sind.

In Figur 8 ist nun ebenfalls gut zu erkennen, wie die Befestigungskeile 20 in den Aussparungen 18 verrastet sind. An den walzenfernen Enden der Wandabschnitte 26 stehen schienenseitige Einrastvorsprünge 42 ein Stück weit in Axialrichtung heraus und greifen in Befestigungskeil-seitige Einrastvorsprünge 44, die an den in Axialrichtung gelegenen Seiten der Befestigungskeile 20 angeordnet sind, ein. Dabei können, wie in Figur 8 gezeigt, mehrere Befestigungskeil-seitige Einrastvorsprünge 44 in Radialrichtung hintereinander vorgesehen sein, um ein Einrasten der Befestigungskeile 20 auf verschiedenen Höhenpositionen, jeweils in Radialrichtung gesehen, zu erlauben. In Figur 8 ist die maximale Einrasttiefe dargestellt, bei welcher jeweils der letzte Befestigungskeil-seitige Einrastvorsprung 44 in den schienenseitigen Einrastvorsprung 42 eingreift und bei der das walzennahe Ende der Befestigungskeile 20 jeweils an den Boden der Aussparungen 18 anschlägt.

Figur 9 zeigt eine schematische perspektivische Ansicht einer Verankerungs- und Befestigungsschiene 46 schräg von oben.

Figur 10 zeigt anhand ihrer Teilfigur 10(a) eine Seitenansicht eines Ausschnitts der Verankerungs- und Befestigungsschiene 46, anhand ihrer Teilfigur 10(b) eine Draufsicht auf diese Verankerungs- und Befestigungsschiene 46 aus Richtung ihres walzenfernen Endes; anhand ihrer Teilfigur 10(c) eine Schnittansicht eines Längsschnitts durch die Verankerungs- und Befestigungsschiene 46 entlang der in Figur 10(b) als Schnittlinie B-B eingezeichneten Symmetrieebene; und anhand ihrer Teilfigur 10(d) eine Schnittansicht durch die Verankerungs- und Befestigungsschiene 46 entlang einer in Figur 10(a) als Schnittlinie A-A eingezeichneten Querebene.

Wiederum hat die Verankerungs- und Befestigungsschiene 46 einen Befestigungsbereich an seiner walzenfernen Endseite, mit einer Vielzahl von nebeneinander angeordneten Aussparungen 48, in denen jeweils mindestens ein Textiloder Kunststoffstreifen (nicht gezeigt) mit Hilfe eines Befestigungskeils 62 klemmend befestigt ist.

Die Verankerungs- und Befestigungsschiene 46 weist zwei entlang ihrer Haupterstreckungsrichtung verlaufende Seitenwände 50 auf, die sich von einer Befestigungsbereich-Bodenplatte 53 und somit von der Walze weg erstrecken und in der eine Vielzahl von Seitenwand-Aussparungen 52 ausgebildet sind.

Jeweils nebeneinander angeordnete Aussparungen 48 sind durch höckerförmige Wandabschnitte 56 voneinander getrennt, die zwischen den beiden Seitenwänden 50 verlaufen.

Die jeweils eine Aussparung 48 in Haupterstreckungsrichtung der Verankerungsund Befestigungsschiene 46 begrenzenden höckerförmigen Wandabschnitte 56 bilden jeweils schräge, in Richtung zu der Befestigungsbereich-Bodenplatte 53 hin aufeinander zu laufende Klemmwände 58 aus.

Die höckerförmigen Wandabschnitte 56 haben jeweils eine Oberseiten 60 zwischen ihren Klemmwänden 58, die in einer im Wesentlichen waagerechten, zu der Befestigungsbereich-Bodenplatte 53 parallelen Ebene liegen kann und die zu den walzenfernen Enden der Schienen-Seitenwände 50 teilweise zurückgesetzt sein kann, wie dies in Figur 9 gut zu erkennen ist.

Von der Befestigungsbereich-Bodenplatte 53 und den höckerförmigen Wandabschnitten 56 werden jeweils trapezförmige Durchgänge eingeschlossen, die in den Figuren 9, 10(a) und 10(c) gut zu erkennen sind, die jedoch auch geschlossen sein können.

In den seitlich neben den Aussparungen 48 liegenden Bereichen der Seitenwände 50 sind im vorliegenden Ausführungsbeispiel, jeweils in der Seitenansicht gemäß Figur 10(a) bzw. im Längsschnitt gemäß Figur 10(c) gesehen, rechteckige Seitenwand-Aussparungen 52 gebildet, an deren oberen Enden schienenseitige Einrast-Vorsprünge 54 angeordnet sind, die entweder in der Ebene der Seitenwände 50 liegen können und somit von den Oberseiten der Seitenwand-Aussparungen 52 gebildet sein können, oder die, wie in den Figuren 9 und 10(b) und 10(d) gut zu erkennen ist, ein Stück weit nach innen, also zu der jeweils gegenüber liegenden Seitenwand 50 hin gerichtet sind.

Befestigungskeile 62, die in die Aussparungen 48 eingesetzt werden können, haben an ihren zu der jeweiligen Seitenwand 50 hin gerichteten Seite wenigstens einen Befestigungskeil-seitigen Einrastvorsprung 68 oder eine Befestigungskeil-seitige Einrastvertiefung.

Die Breite eines solchen Befestigungskeils 62 entspricht in etwa der Breite der Aussparung 48 oder ist geringfügig geringer ausgebildet als diese, sodass solche Befestigungskeile 62 von der walzenfernen Seite der Verankerungs- und Befestigungsschiene 46 in die Aussparungen 48 eingebracht und dort mittels ihrer Befestigungskeil-seitigen Einrast-Vorsprünge 68 gegenüber den Schienen-seitigen Einrastvorsprüngen 54 klemmend befestigt werden können.

Dabei werden die Befestigungskeile 62 in den Aussparungen 48 verrastet, indem die Schienen-seitigen Einrast-Vorsprünge 54 in die Befestigungskeil-seitigen Einrast-Vorsprünge 68 oder Befestigungskeil-seitigen Einrastvertiefungen eingreifen, was in Figur 10(d) gut zu erkennen ist.

Dabei können die Befestigungskeile 62, wie in den Figuren 10(a) und 10(d) gezeigt, mehrere Befestigungskeil-seitige Einrast-Vorsprünge 68 hintereinander auf verschiedenen Höhenpositionen haben, um ein Einrasten der Befestigungskeile 62 auf verschiedenen Höhenpositionen, jeweils in Tiefenrichtung der Aussparung 48 bzw. in Radialrichtung bezogen auf die Walze gesehen, zu erlauben. In den Figuren 9, 10(a), 10(c) und 10(d) ist die maximale Einrasttiefe dargestellt, bei der jeweils der letzte Befestigungskeil-seitige Einrast-Vorsprung 68 in den Schienenseitigen Einrast-Vorsprung 54 eingreift und bei der das walzennahe Ende des Befestigungskeils 62 jeweils an den Boden der Aussparung 48 anschlägt.

Die Befestigungskeile 62 haben in Querrichtung, bezogen auf die in die Aussparung 48 eingesetzte Position gesehen, eine im Wesentlichen rechteckige Grundform. In Längsrichtung, wiederum bezogen auf die in die Aussparung 48 eingesetzte Position, haben die Befestigungskeile 62 eine sich zu ihrem walzennahen Ende hin verjüngende Keilform, wie dies in Figur 10(c) gut zu erkennen ist.

Zwischen dem jeweiligen Befestigungskeil 62 und den schrägen Klemmwänden 58, in Haupterstreckungsrichtung der Verankerungs- und Befestigungsschiene 46 gesehen, sowie zwischen dem unteren Ende des Befestigungskeils 62 und der Befestigungsbereich-Bodenplatte 53, die den Boden der Aussparung 48 bildet, möge man sich Textil- oder Kunststoffstreifen klemmend befestigt vorstellen.

Die Verankerungs- und Befestigungsschiene 46 verfügt des Weiteren über einen Verankerungsbereich zur Verankern bzw. zum lösbaren Befestigen an einer den Walzenkörper einer Autowaschanlage umgebenden Matte. Dieser Verankerungsbereich ist bei der Verankerungs- und Befestigungsschiene 46 durch eine Vielzahl von Einsteckvorsprüngen 66 ausgebildet, die sich jeweils von der Unterseite der Befestigungsbereich-Bodenplatte 53, welche die walzennahe Unterseite der Verankerungs- und Befestigungsschiene 46 bildet, in Richtung zu der Walze hin erstrecken.

Die Unterseite der Verankerungs- und Befestigungsschiene 46, von der sich die Einsteckvorsprünge 66 erstrecken, kann dabei eben oder konkav ausgebildet sein und eine Anliegefläche für die Matte bilden. Die Einsteckvorsprünge 66 können, wie in den Figuren 10(a), 10(c) und 10(d) gezeigt, einen verbreiterten Kopfbereich aufweisen.

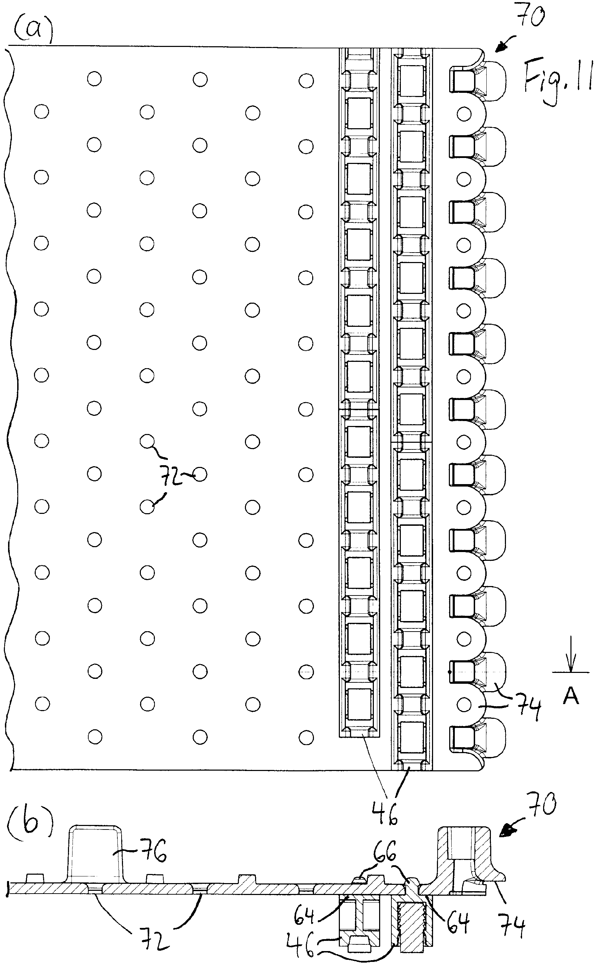

Figur 11 zeigt anhand ihrer Teilfigur 11 (a) eine Draufsicht auf einen Ausschnitt einer Matte 70 mit zwei daran befestigten Verankerungs- und Befestigungsschienen 46; und anhand ihrer Teilfigur 11 (b) eine Schnittansicht in horizontaler Richtung durch diese Matte 70 und durch die zwei daran befestigten Verankerungsund Befestigungsschienen 46.

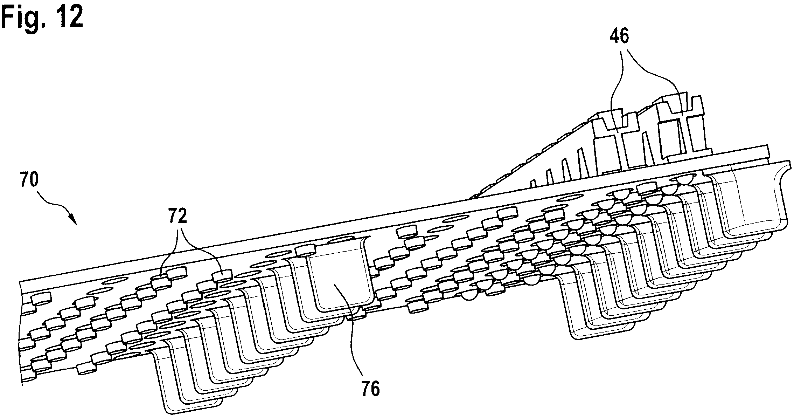

Figur 12 zeigt eine schematische perspektivische Ansicht auf die Matte 70 mit zwei daran befestigten Verankerungs- und Befestigungsschienen 46 schräg von unten.

Die Matte 70, die auch als Trägermatte für die Wasch-, Pflege- und/oder Trocknungselemente einer Wasch-, Pflege- und/oder Trocknungswalze einer Autowaschanlage bezeichnet werden kann, weist eine flache, im Wesentlichen rechteckige Grundform auf und ist aus einem flexiblen Material hergestellt, insbesondere aus einem flexiblen Kunststoffmaterial, sodass sie um den Walzenkörper einer Wasch-, Pflege- und/oder Trocknungswalze einer Autowaschanlage herum gelegt werden kann.

Die Breite der in den Figuren 11 und 12 rechteckig dargestellten Matte 70 entspricht dabei im Wesentlichen dem Umfang der Walze der Autowaschanlage, um welche diese herum gelegt wird. An beiden Querseiten der Matte 70 sind Matten-Endbefestigungs-Einrichtungen 74 ausgebildet, mittels derer die Querseiten der Matte 70 miteinander verbunden werden können. Diese Matten-Endbefestigungs-Einrichtungen 74 sind dem Fachmann bekannt und brauchen hier nicht näher erläutert zu werden.

Des Weiteren verfügt die Matte 70 an ihrer Rückseite, die in Figur 11 (b) oben und in Figur 12 unten dargestellt ist, über integrale Rücksprünge 76 zum Eingreifen in entsprechende Vertiefungen des Walzenkörpers und zum entsprechenden Fixieren der Matte 70 an dem Walzenkörper. Dies ist dem Fachmann ebenfalls bekannt und braucht hier nicht näher erläutert zu werden.

Die Matte 70 verfügt über eine Vielzahl von Einstecklöchern 72, die sich durch die Matte 70 von ihrer Oberseite bis zu ihrer Rückseite erstrecken. Diese Einstecklöcher 72 können an der Rückseite der Matte verstärkt ausgebildet sein, mit einem rückseitig verbreiteten Kragenabschnitt, wie dies in den Figuren 11 (b) und 12 gezeigt ist.

Die Einstecklöcher 72 können in jeweils voneinander beabstandeten Reihen gruppiert sein, wie dies in den Figuren 11 (a) und 12 gut zu erkennen ist. Der Abstand zwischen jeweils übereinander angeordneten Einstecklöchern 72 entspricht dabei dem Abstand zwischen den Schienen-seitigen Einsteckvorsprüngen 66 und die Materialstärke der Matte 70 entspricht dabei im Wesentlichen der Abmessung der Einsteckvorsprünge 66 zwischen der walzennahen Anliegefläche 64 und dem verbreiterten Kopfabschnitt, sodass die Verankerungs- und Befestigungsschienen 46 in vertikaler Ausrichtung an der Matte 70 befestigt werden können, indem einfach die Einsteckvorsprünge 66 so weit in die Einstecklöcher 72 eingeschoben werden, bis deren Kopfabschnitte die Einstecklöcher 72 hintergreifen und die Einsteckvorsprünge 66 somit gegenüber den Einstecklöchern 72 verrasten. Die Einstecklöcher 72 dehnen sich dabei temporär, um ein Durchtreten der Kopfabschnitte, die einen geringfügig größeren Durchmesser haben als die Einstecklöcher 72, zu erlauben.

Analog dazu können die Verankerungs- und Befestigungsschienen 46 auch wieder von der Matte 70 gelöst werden, indem diese Verrastung gelöst und die Verankerungs- und Befestigungsschienen 46 wieder von der Matte 70 entfernt werden. Wie in den Figuren 11 (a) und 12 gezeigt, können jeweils zwei benachbarte Vertikalreihen von Einstecklöchern 72 höhenmäßig zueinander versetzt sein.

In den Figuren 11 und 12 ist die Matte mit den jeweils zwei darin befestigten Verankerungs- und Befestigungsschienen 46 der besseren Darstellung wegen ohne Textil- oder Kunststoffstreifen gezeigt. Diese möge man sich klemmend durch die Befestigungskeile 62 in den Aussparungen 48 befestigt und sich von den Verankerungs- und Befestigungsschienen 46 nach außen erstreckend vorstellen.

In Figur 11 (b) ist noch eine mittige Zwischenwand zu erkennen, die innerhalb des höckerförmigen Wandabschnitts 56 in Längserstreckungsrichtung der Verankerungs- und Befestigungsschiene 46 verläuft und somit für eine zusätzliche Stabilität des höckerförmigen Bandabschnitts 56 sorgt.

Im vorliegenden Ausführungsbeispiel der Figuren 11 und 12 sind exemplarisch nur zwei Verankerungs- und Befestigungsschienen 46 durch Einstecken der Steckvorsprünge 66 in jeweilige Vertikalreihen von Einstecklöchern 72 an der Matte 70 befestigt.

In dem Betriebszustand möge man sich die Matte 70 als an dem Walzenkörper befestigt und diesen umgebend vorstellen, und man möge sich vorstellen, dass wenigstens ein Großteil, insbesondere alle Vertikalreihen von Einstecklöchern 72 durch entsprechende Wasch-, Pflege- und/oder Trocknung-Elemente mit Verankerungs- und Befestigungsschienen 46 und mit klemmend daran befestigten Textil- oder Kunststoffstreifen belegt sind.

### Bezugszeichenliste

- 4: zylinderförmiges Aufnahmeelement
- 6: Verankerungs- und Befestigungsschiene
- 8: Textil- oder Kunststoffstreifen
- 10: Wasch-, Pflege- und/oder Trocknungselement
- 12: wulstartiger Ankerbereich
- 14: Befestigungsbereich
- 16: schmaler Verbindungs-Steg
- 18: Aussparungen
- 20: Befestigungskeile
- 22: wulstartige Ankerbereichs-Abschnitte
- 24: schmale Zwischenbereiche
- 26: Wandabschnitte der walzenfernen Endseite
- 28: Wandstege
- 30: verbreiterterAnschlags-Endabschnitt
- 32: Verbindungs-Stange
- 34: Adapterring-Halteeinbuchtungen
- 36: C-förmige Aufnahmenuten
- 38: Zwischenräume
- 40: ringförmige Adapterring-Haltebereiche
- 42: Schienen-seitiger Einrast-Vorsprung
- 44: Befestigungskeil-seitige Einrast-Vorsprünge
- 46: Verankerungs- und Befestigungsschiene
- 48: Aussparungen
- 50: Seitenwände
- 52: Seitenwand-Aussparungen
- 53: Befestigungsbereich-Bodenplatte
- 54: Schienen-seitige Einrast-Vorsprünge
- 56: höckerförmige Wandabschnitte
- 58: Klemmwände
- 60: teilweise zurückgesetzte Oberseiten
- 62: Befestigungskeile
- 64: walzennahe Anliegefläche
- 66: Einsteckvorsprünge
- 68: Befestigungskeil-seitige Einrast-Vorsprünge
- 70: Matte
- 72: Einstecklöcher
- 74: Matten-End-Befestigungs-Einrichtungen
- 76: integrale Rücksprünge

## Patentansprüche

1. Wasch-, Pflege- und/oder Trocknungselement für eine Wasch-, Pflege- und/oder Trocknungswalze einer Autowaschanlage, aufweisend
eine Verankerungs- und Befestigungsschiene (6), insbesondere aus einem Kunststoffmaterial, mit einem Verankerungsbereich an ihrem walzennahen Ende und mit einem Befestigungsbereich (14) mit einer Vielzahl von jeweils nebeneinander angeordneten Befestigungseinrichtungen für Textil- oder Kunststoffstreifen (8) an ihrem walzenfernen Ende; und
eine Vielzahl von Textil- oder Kunststoffstreifen (8), die in den Befestigungseinrichtungen befestigt sind.

2. Wasch-, Pflege- und/oder Trocknungselement nach Anspruch 1,
wobei Textil- oder Kunststoffstreifen (8) unterschiedlicher Art in den Befestigungseinrichtungen befestigt sind.

3. Wasch-, Pflege- und/oder Trocknungselement nach Anspruch 1 oder 2,
wobei die Befestigungseinrichtungen als Klemm-Befestigungseinrichtungen ausgebildet sind; und
wobei insbesondere wenigstens ein Teil der Textil- oder Kunststoffstreifen (8) mit ihren mittleren Bereichen in den Klemm-Befestigungseinrichtungen klemmend befestigt sind und ihre Enden von der Verankerungs- und Befestigungsschiene (6) wegstehen.

4. Wasch-, Pflege- und/oder Trocknungselement nach Anspruch 3,
wobei die Klemm-Befestigungseinrichtungen ausgebildet sind als nebeneinander angeordnete Aussparungen (18) in der walzenfernen Endseite des Befestigungsbereichs (14) und als in die Aussparungen (18) eingebrachte Befestigungsstifte oder -keile (20); und
wobei die Textil- oder Kunststoffstreifen (8) jeweils zwischen einer Aussparung (18) und einem Befestigungsstift oder -keil (20) klemmend befestigt sind.

5. Wasch-, Pflege- und/oder Trocknungselement nach Anspruch 4,
wobei jeweils nebeneinander angeordnete Aussparungen (18) von Wandabschnitten (26), insbesondere der walzenfernen Endseite der Verankerungs- und Befestigungsschiene (6) oder von höckerförmigen Wandabschnitten (56) getrennt sind.

6. Wasch-, Pflege- und/oder Trocknungselement nach Anspruch 4 oder 5,
wobei wenigstens eine Aussparung (18) an zwei, insbesondere in Schienenerstreckungsrichtung oder in Schienenquerrichtung gegenüberliegenden Wänden über wenigstens einen Einrast-Vorsprung (42) und/oder über wenigstens eine Einrast-Vertiefung verfügt; und/oder
wobei der wenigstens eine Befestigungsstift oder -keil (20) an zwei gegenüberliegenden Wänden, die insbesondere im in die Aussparung (18) eingebrachten Zustand des Befestigungsstifts oder -keils (20) in Schienenerstreckungsrichtung oder in Schienenquerrichtung gegenüberliegen, über wenigstens eine damit korrespondierende Einrast-Vertiefung und/oder wenigstens einen damit korrespondierenden Einrast-Vorsprung (44) verfügt; und/oder
wobei jeweils ein Befestigungsstift oder -keil (20) so in eine Aussparung (18) eingebracht ist, dass die mit wenigstens einer Einrast-Vertiefung und/oder mit wenigstens einem Einrast-Vorsprung (44) versehenen Wände des Befestigungsstifts oder -keils (20) gegenüber den mit wenigstens einem Einrast-Vorsprung (42) und/oder mit wenigstens einer Einrast-Vertiefung versehenen Wänden der Aussparung (18) liegen und dass der wenigstens eine Einrast-Vorsprung (42, 44) und/oder die wenigstens eine Einrast-Vertiefung ineinander eingreifen und den Befestigungsstift oder-keil (20) klemmend in der Aussparung (18) befestigen.

7. Wasch-, Pflege- und/oder Trocknungselement nach Anspruch 6,
wobei wenigstens eine Aussparung (18) zwei, insbesondere in Schienenquerrichtung gegenüberliegende Wandstege (28) aufweist, die durch Unterbrechungen von den Wandstegen (28) der jeweils benachbarten Aussparung (18) beabstandet sind; und/oder
wobei sich der Abstand zwischen den zwei gegenüberliegenden Wandstegen (28) einer Aussparung (18) vom walzenfernen zum walzennahen Ende des Befestigungsbereichs (14) verringert; und
wobei insbesondere wenigstens ein Befestigungsstift oder -keil als Befestigungskeil (20) ausgebildet ist und zwei gegenüberliegende Wände aufweist, die insbesondere im in die Aussparung (18) eingebrachten Zustand des Befestigungsstifts oder -keils (20) in Schienenquerrichtung gegenüberliegen; und/oder
wobei diese beiden Wände insbesondere zum walzennahen Ende des Befestigungskeils (20) hin aufeinander zulaufen; und
wobei insbesondere wenigstens ein Textil- oder Kunststoffstreifen (8) zwischen den beiden aufeinander zulaufenden Wänden des Befestigungskeils (20) und den aufeinander zulaufenden Wandstegen (28) der Aussparung (18), in welcher der Befestigungskeil (20) klemmend befestigt ist, klemmend befestigt ist.

8. Wasch-, Pflege- und/oder Trocknungselement nach einem der Ansprüche 4 bis 7,
wobei die Befestigungsstifte oder -keile (20) an ihrer schienenfernen Seite über eine parallel zur Erstreckungsrichtung der Verankerungs- und Befestigungsschiene (6) verlaufenden Verbindungsstange (32) miteinander verbunden sind.

9. Wasch-, Pflege- und/oder Trocknungselement nach einem der vorhergehenden Ansprüche,
wobei der Befestigungsbereich (14) der Verankerungs- und Befestigungsschiene (6) eine zu seinem walzenfernen Ende hin verbreiterte, insbesondere keilförmige Gestalt aufweist; und/oder
wobei der Verankerungsbereich (12) mit dem Befestigungsbereich (14) über einen schmalen Verbindungs-Steg (16) miteinander verbunden sind.

10. Wasch-, Pflege- und/oder Trocknungselement nach einem der vorhergehenden Ansprüche, wobei der Verankerungsbereich an dem walzennahen Ende der Verankerungs- und Befestigungsschiene (6) als zumindest bereichsweise wulstartiger Ankerbereich (12) ausgebildet ist; und
wobei insbesondere der wulstartige Ankerbereich (12) an einem Ende verbreitert ausgebildet ist, zum Bilden eines Anschlags (30) gegenüber einem Ende einer Aufnahmenut (36) eines zylinderförmigen Aufnahmeelements (4) einer Wasch-, Pflege- und/oder Trocknungswalze.

11. Wasch-, Pflege- und/oder Trocknungselement nach einem der Ansprüche 4 bis 10,
wobei bei wenigstens einer Aussparung (48) Seitenwand-Aussparungen (52) an den beiden Schienen-Seitenwänden (50) vorgesehen sind; und/oder
wobei an dem walzenfernen Ende der Seitenwand-Aussparungen (52) ein schienenseitiger Einrast-Vorsprung (54) oder eine schienenseitiger Einrast-Vertiefung ausgebildet ist; und/oder
wobei die höckerförmigen Wandabschnitte (56) jeweils schräge, sich vom walzenfernen zum walzennahen Ende des Befestigungsbereichs hin verjüngene Klemmwände (58) ausbilden; und/oder
wobei die höckerförmigen Wandabschnitte (56) jeweils benachbarter Aussparungen (48) durch eine, insbesondere zu der Ebene der walzenfernen Enden der Schienen-Seitenwände (50) teilweise zurückgesetzte Oberseiten ausbilden.

12. Wasch-, Pflege- und/oder Trocknungselement nach einem der Ansprüche 4 bis 11,
wobei wenigstens ein Befestigungsstift oder -keil als Befestigungskeil (62) ausgebildet ist und zwei gegenüberliegende Wände aufweist, die insbesondere im in die Aussparung (48) eingebrachten Zustand des Befestigungsstifts oder -keils (62) in Schienenlängsrichtung gegenüberliegen; und/oder
wobei diese beiden Wände zum walzennahen Ende des Befestigungskeils (62) hin aufeinander zulaufen; und/oder
wobei wenigstens ein Textil- oder Kunststoffstreifen (8) zwischen den beiden aufeinander zulaufenden Wänden des Befestigungskeils (62) und den aufeinander zulaufenden Klemmwänden (58) der Aussparung (48), in welcher der Befestigungskeil (62) klemmend befestigt ist, klemmend befestigt ist.

13. Wasch-, Pflege- und/oder Trocknungselement nach einem der Ansprüche 1 bis 9 und 11 bis 12,
wobei der Verankerungsbereich an dem walzennahen Ende der Verankerungs- und Befestigungsschiene (6) als eine Vielzahl von Einsteckvorsprüngen (66) ausgebildet ist; und/oder
wobei die Einsteckvorsprünge (66) zum Einstecken in entsprechende Einstecklöcher (72) einer die Walze umgebende Matte (70) ausgebildet sind, und/oder wobei die Einsteckvorsprünge (66) von einer walzennahen Anliegefläche (64) vorstehen und einen verbreiterten Kopfbereich aufweisen.

14. Wasch-, Pflege- und/oder Trocknungswalze, insbesondere für Autowaschanlagen, aufweisend:
einen drehantreibbaren Walzenkörper; und
wenigstens ein mit dem Walzenkörper drehfest verbundenes und im Wesentlichen zylinderförmiges Aufnahmeelement (4);
wobei das wenigstens eine Aufnahmeelement (4) an seiner Außenseite in Axialrichtung verlaufende Aufnahmenuten (36) für Wasch-, Pflege- und/oder Trocknungselemente (10) und zwischen benachbarten Aufnahmenuten (36) liegende Zwischenräume (38) aufweist; und
wobei wenigstens ein Wasch-, Pflege- und/oder Trocknungselement (10) nach einem der Ansprüche 10 bis 12 in eine Aufnahmenut (36) eingesetzt ist und
wobei insbesondere wenigstens zwei in Axialrichtung übereinander angeordnete, mit dem Walzenkörper drehfest verbundene und im Wesentlichen zylinderförmige Aufnahmeelemente (4) vorgesehen sind; und
wobei insbesondere jeweils zwei benachbarte Aufnahmeelemente (4) so in Drehrichtung zueinander versetzt sind, dass die Aufnahmenuten (36) eines Aufnahmeelements (4) in Axialrichtung mit Zwischenräumen (38) des jeweils benachbarten Aufnahmeelements (4) fluchten, um so ein auseinanderbaufreies Auswechseln der Wasch-, Pflege- und/oder Trocknungselemente (10) zu erlauben.

15. Wasch-, Pflege- und/oder Trocknungswalze, insbesondere für Autowaschanlagen, aufweisend:
einen drehantreibbaren Walzenkörper; und
wenigstens eine mit dem Walzenkörper drehfest verbundene und den Walzenkörper umgebende Matte (70) mit einer Vielzahl von Einstecklöchern (72);
wobei wenigstens ein Wasch-, Pflege- und/oder Trocknungselement (10) nach Anspruch 13 an der Matte (70) befestigt ist, indem seine Einsteckvorsprünge in entsprechende Einstecklöcher der Matte eingesteckt sind; und
wobei die Matte insbesondere mehrere, jeweils voneinander beabstandete Reihen von übereinander angeordneten Einstecklöchern aufweist; und/oder wobei insbesondere an jeder Reihe von übereinander angeordneten Einstecklöchern ein Wasch-, Pflege- und/oder Trocknungselement (10) nach Anspruch 13 durch Einstecken seiner Einsteckvorsprünge in die Einstecklöcher der Reihe befestigt ist.
